# EUROPEAN PATENT APPLICATION

(11) **EP 3 070 929 A1**
(43) Date of publication of application: **21.09.2016**
(21) Application number: 15305399.6
(22) Date of filing: 19.03.2015
(51) Int. Cl.: H04N 5/232

(54) **APPARATUS AND METHOD FOR GENERATING GENERIC VIDEO SHOTS**

(71) Applicant: Thomson Licensing, 92130 Issy-les-Moulineaux (FR)
(72) Inventor: Dore, Renaud, 35576 Cesson-Sévigné (FR); Maetz, Yves, 35576 Cesson-Sévigné (FR); Eluard, Marc, 35576 Cesson-Sévigné (FR); Gendrot, Rémy, 35576 Cesson-Sévigné (FR); Mischler, Denis, 35576 Cesson-Sévigné (FR)
(74) Representative: Browaeys, Jean-Philippe

(57) **Abstract**

A generic shot of a scene is generated by capturing (S23), by a video capture unit (115), video of the scene. During capture of the video, an image processing device (120) continually analyses (S24) the video thus far captured to determine whether the video thus far captured enables generation of a generic shot of the scene. If generation of a generic shot of the scene is possible, the image processing device stops the capture and saving the shot of the scene, while the capture continues if generation of a generic shot of the scene is not possible. Generation of a generic shot is possible if, in particular, it is possible to remove moving entities from the shot by replacing them with elements from the background.

## Description

### TECHNICAL FIELD

The present principles relate generally to video media and in particular to generation of reusable video shots.

### BACKGROUND

This section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

It has been common for decades for film directors to insert short, off-the-shelf video sequences in order to illustrate for example spatial movement by for instance using a short sequence of a plane taking off as a sign that the action is moving to another place. Currently, many companies propose databases of stock footage for this purpose, for example Shutterstock and Pond5, providing access to plenty of different locations and situations. It is for example very easy to find a shot of a New York street with yellow cabs.

At the opposite side of such localized scenes are generic scenes, i.e. shots where the captured footage is generic to enable modification by addition of specific materials (other footage or virtual objects) to customize the footage. For example, imagine a shot of a street, without any specific elements such as pedestrians and cars. This footage is generic and can be customized by adding elements in order to localize the scene. For example, adding yellow cabs to suggest that the scene is located in New York or red double-decker bus for London. Adding pre-war cars suggests that the scene is taking place in the 30s.

A constraint is that generic footage should, within reason, be plausible in a different location such as on a typical street in New York or in a typical French village, therefore excluding elements such as recognizable buildings (Eiffel tower, the Flat Iron Building, etc.) and preferably people and vehicles. As of today, such generic scenes are difficult to obtain.

### SUMMARY

In a first aspect, the principles are directed to a method for generating a shot of a scene. A video capture unit captures video of the scene. During capture of the video, an image processing device analyses the video thus far captured to determine whether the captured video enables generation of a generic shot of the scene. If generation of a generic shot of the scene is possible, the image processing device stops the capture and saves the shot of the scene. If generation of a generic shot of the scene is not possible, the capture continues.

Various exemplary embodiments of the first aspect can comprise:
- That the image processing device analyses shooting conditions at the scene to determine whether it is likely that the shooting conditions enable generation of a generic shot of the scene; and if it is determined that this is likely, starts capture of video of the scene. If it is determined that the shooting conditions enable generation of a generic shot of the scene if the flow of pedestrians and vehicles enable removal of the pedestrians or vehicles.
- That the image processing device computes kinetics of mobile entities in the shot of the scene.
- That the image processing device removes moving entities from the shot of the scene.

In a second, the principles are directed to a system for generating a shot of a scene. The system comprises a video capture unit configured to capture video of the scene and an image processing device configured to during capture of the video, continually analyse the video thus far captured to determine whether the video thus far captured enables generation of a generic shot of the scene; and if generation of a generic shot of the scene is possible, stop the capture and save the shot of the scene, or if generation of a generic shot of the scene is not possible, continue the capture.

Various exemplary embodiments of the second aspect comprise:
- That the image processing device is configured to analyse shooting conditions at the scene to determine whether it is likely that the shooting conditions enable generation of a generic shot of the scene; and if it is determined that this is likely, start capture of video of the scene. It is advantageous that it is determined that the shooting conditions enable generation of a generic shot of the scene if the flow of pedestrians and vehicles enable removal of the pedestrians or vehicles.
- That the image processing device is configured to compute kinetics of mobile entities in the shot of the scene.
- That the image processing device is configured to remove moving entities from the shot of the scene.

### BRIEF DESCRIPTION OF DRAWINGS

Features of the present principles will now be described, by way of non-limiting example, with reference to the accompanying drawings, in which
Figure 1 illustrates an exemplary system in which the present principles may be implemented;
Figure 2 illustrates a flowchart for an exemplary method for video asset generation according to an embodiment; and
Figures 3A-3E further illustrate the exemplary method of Figure 2.

### DESCRIPTION OF EMBODIMENTS

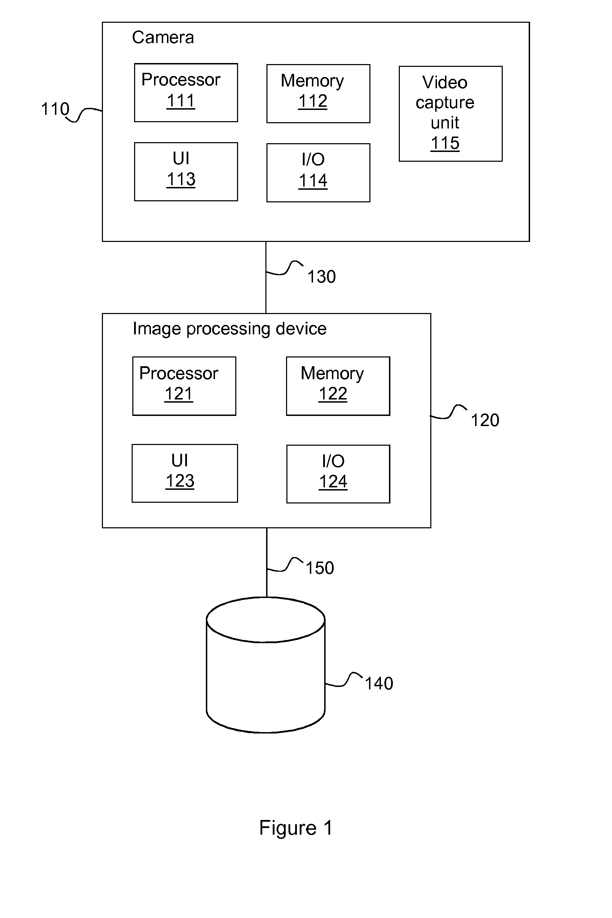

Figure 1 illustrates an exemplary system in which the present principles may be implemented. The system comprises a camera 110, a video processing device 120 and a database 140.

The camera 110 is configured to capture video using a video capture unit 115, which can comprise any kind of suitable hardware and software for capturing digital video. The camera 110 also preferably comprises at least one hardware processing unit ("processor") 111, internal, external or a combination of internal and external memory 112 for storing captured digital video, a user interface 113 for interacting with a user, and a second interface (I/O) 114 for interaction with other devices such as the video processing device 120 over connection 130. It will be appreciated that for example the processor may be located in a separate device (not illustrated). It will also be appreciated that the camera 110 may be connected directly to the database 140.

The video processing device 120 preferably comprises at least one hardware processing unit ("processor") 121, internal, external or a combination of internal and external memory 122 for storing digital video, a user interface 123 for interacting with a user, and a second interface (I/O) 124 for interaction with other devices such as the camera 110 over connection 130 and the database 140 over connection 150. It will also be appreciated that the camera 110 and the video processing device 120 may be implemented as a single device.

The database 140 can be any database suitable for storing digital video. In an optional embodiment, database 140 is configured to store large amounts of digital video. Note, the system of Figure 1 can be implemented within a single apparatus using a series of modules such as video capture module 115, image processing module 120, and the like.

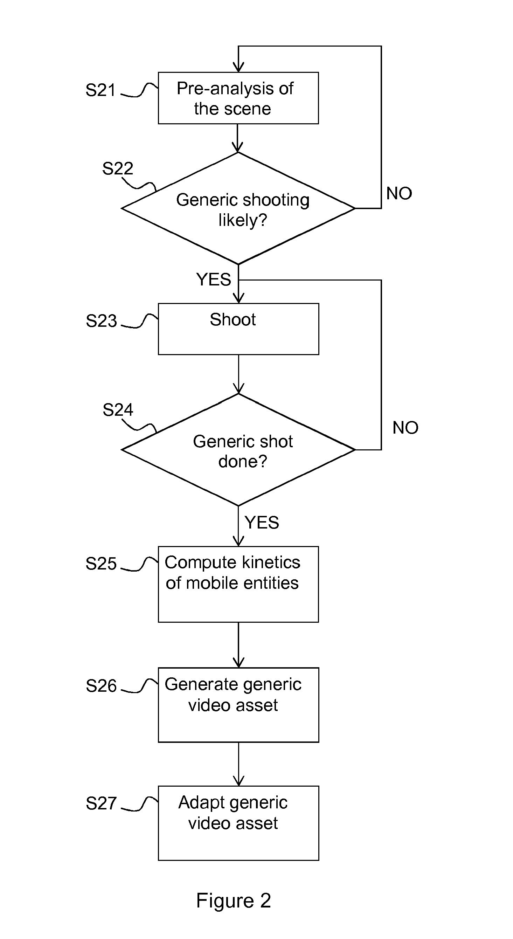

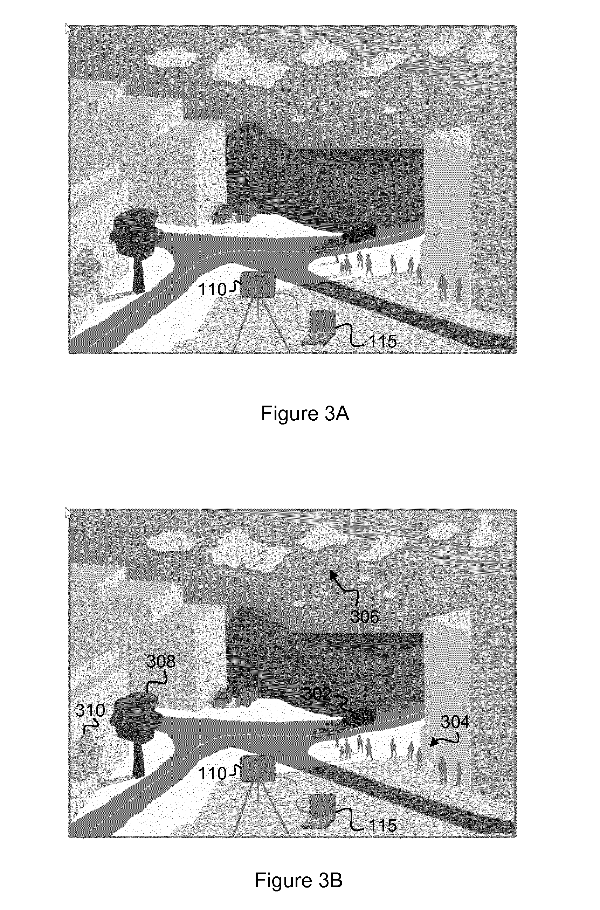

Figure 2 and Figures 3A-3E illustrate an exemplary method for video asset generation according to an embodiment. When a user has positioned the camera 110 in front of a scene as shown in Figure 3A, the video capture unit 115 captures video of the scene. In this description, a scene is intended to mean the image field captured by the video capture unit 115.

In optional step S21, the processor 121 performs a pre-analysis of the scene. The pre-analysis uses image processing techniques in order to, for example:
- determine whether or not the flow of pedestrians or vehicles in the scene is too dense to allow removal of the pedestrians or vehicles,
- the weather changes too much, or
- the camera is not stable enough.

In optional step S22, based on the pre-analysis, it is determined whether or not the conditions are likely to allow shooting a video of the scene that can be made generic, i.e. if generic shooting is likely to be possible. A generic shooting is likely to be possible if, for example, it is likely that the pedestrians and vehicles can be removed.

The processor 121 indicates the possibility so that the user can start the shoot or try again some other time. If generic shooting is unlikely, the reason-e.g. "too many moving elements to allow removal" - is preferably indicated to the user.

Once the user gives the instruction to shoot, preferably through user interface 123, the processor 121 instructs the camera 110 to start shooting. In step S23, the camera 110 shoots the scene. It will be appreciated that the camera 110 continues to shoot the scene until the user stops the shot or the processor 121 determines, in step S24, using a rating process whether or not the captured video makes it possible to generalize the shot. This may, for example, not be the case in the presence of too heavy traffic on a road in the scene or of too many pedestrians on a pavement, which would prevent extraction of the background. The processor 121 preferably notifies the user, through the user interface 123, of the outcome of the determination. This determination can be done by known image processing techniques in order to, for example in an exemplary embodiment:
- Find moving entities and stationary entities in the scene. In this context, an entity could for instance be the sky, a cloud, the sea, a building, a hill, a tree, a shadow (of another entity), a car, a door, and a person. It will be noted that over time, an entity can be both stationary and moving, such as a parked car that drives away or a flying bird that lands; in this case, the dual characteristic 'stationary-moving' is registered for the entity. It will be noted that an entity need not be a distinct 'real-life' entity, but that it for example can be the visible part of several buildings if the rest of the buildings are hidden behind trees that sway in the breeze. Furthermore, many image processing techniques are able to distinguish between different entities, such as a car from a pedestrian and so on.
- Find where moving entities move in front of stationary entities.
- Determine the parts of the scene that, at least once in the captured video, are made up of stationary objects. For example, if a single pedestrian moves through the scene, then the stationary objects behind the pedestrian all along its trajectory will be visible in at least part of the captured video. The processor 121 registers the time when an entity is stationary and visible.

This is illustrated in Figure 3B, in which moving entities such as the car 302 in the street, the pedestrians 304, the clouds 306, the moving leafage 308 and the moving shadow 310 of the tree are detected and analysed.

The skilled person will appreciate that it is possible for the user to set a tolerance level so that non-optimal shooting conditions nevertheless result in a shot scene. For example, if essentially static pedestrians and vehicles are in the far background, they may be allowed in the image if they do not occupy more than a certain percentage, say totalling less than 2% of the image.

The skilled person will also appreciate that processor 121 can notify the user, through the user interface 113, 123, of certain entities that do not satisfy the conditions as shown in previous example.

In one exemplary embodiment, the video capture unit 115 is configured for stereo video capture and computer stereo vision in order to generate a depth map of elements in the foreground. This makes it easier for the system to detect entities and determine if they are moving or stationary. The skilled person will appreciate that plenoptic cameras could be used for that purpose.

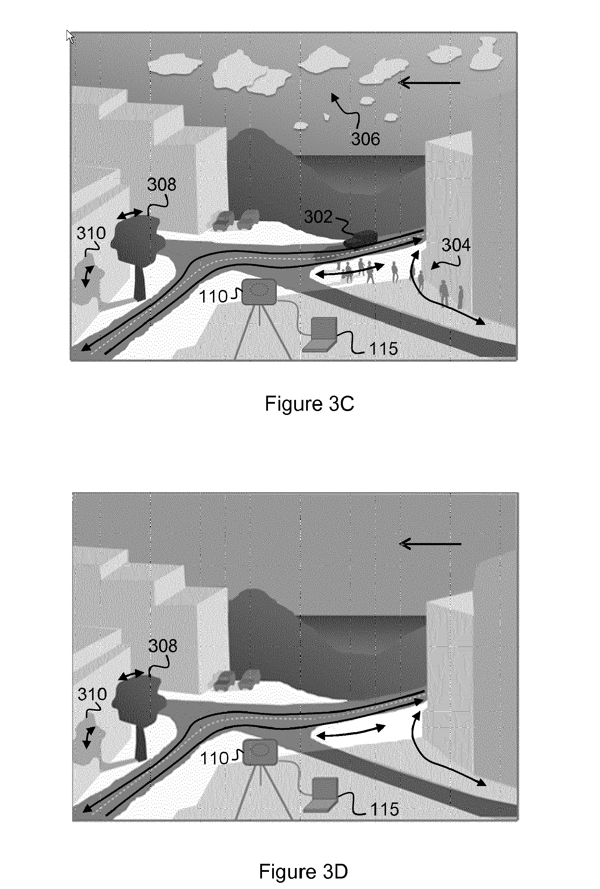

In step S25, the kinetics of the mobile entities in the shot are analysed by the video processing device 120 that has received the shot from the camera 110. Figure 3C illustrates the kinetics of the car 302 and of another vehicle (not shown) passing the other way, the pedestrians 304 and the clouds 306.

In step S26, a generic video asset is generated from the shot by removing enumerable moving entities (pedestrians, vehicles, and the like) and their shadows and replacing them with the stationary entities in the background.

Figure 3D illustrates a generic video asset overlaid with kinetics information. The kinetics information are meta-data, and can be shown to a viewer for illustration purposes.

The generic video asset is then stored in the database 140. The generic video asset comprises the processed footage, the kinetics of entities, and any meta-data for linking these together.

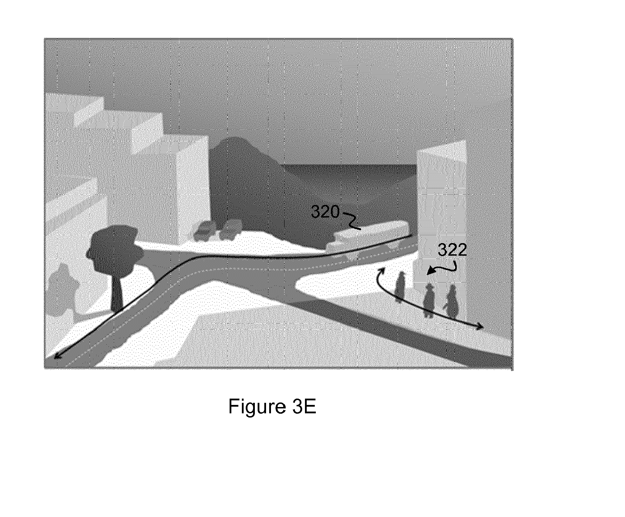

In step S27, the generic video asset is adapted to generate a shot for a film. Figure 3E illustrates an example of how a bus 320 has been inserted in place of the car and how it uses the car's kinetics to move through the shot. In addition, three pedestrians 322 have been inserted and associated with the kinetics of some of the pedestrians in the initial shot. It is advantageous that the inserted entities are generated using CGI.

It will be appreciated that the present principles can provide generation of generic video shots that may be reused in film-making. In some exemplary embodiments, the present principles can increase the likelihood of generating a generic video shot since it is possible to wait until the conditions enable generalization of the shot, while this is not possible for already shot stock footage.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method for generating a shot of a scene, the method comprising:
- capturing (S23), by a video capture unit (115), video of the scene;
- during capture of the video, analysing (S24), by an image processing device (120), the video thus far captured to determine whether the captured video enables generation of a generic shot of the scene; and
- if generation of a generic shot of the scene is possible, stopping, by the image processing device (120), the capture operation and saving the shot of the scene; or
- if generation of a generic shot of the scene is not possible, continuing the capture operation.

2. The method of claim 1, further comprising:
- analysing (S21), by the image processing device (120), shooting conditions at the scene to determine whether the shooting conditions enable generation of a generic shot of the scene; and
- if it is determined (S22) that the shooting conditions enable generation of the generic shot of the scene, starting, by the image processing device (120), capture of video of the scene.

3. The method of claim 2, wherein it is determined that the shooting conditions enable generation of a generic shot of the scene if the flow of pedestrians and vehicles enable removal of the pedestrians or vehicles.

4. The method of claim 1, further comprising computing (S25), by the image processing device (120), kinetics of mobile entities in the shot of the scene.

5. The method of claim 1, further comprising removing (S26), by the image processing device (120), moving entities from the shot of the scene.

6. A apparatus configured to generate a shot of a scene, the apparatus comprising:
- a video capture unit (115) configured to capture video of the scene;
- an image processing device (120) configured to:
- during capture of the video, continually analyse the video thus far captured to determine whether the video thus far captured enables generation of a generic shot of the scene; and
- if generation of a generic shot of the scene is possible, stop the capture and save the shot of the scene; or
- if generation of a generic shot of the scene is not possible, continue the capture.

7. The system of claim 6, wherein the image processing device (120) is further configured to:
- analyse shooting conditions at the scene to determine whether the shooting conditions enable generation of a generic shot of the scene; and
- if it is determined that the shooting conditions enable generation of a generic shot of the scene, start capture of video of the scene.

8. The system of claim 7, wherein it is determined that the shooting conditions enable generation of a generic shot of the scene if the flow of pedestrians and vehicles enable removal of the pedestrians or vehicles.

9. The system of claim 6, wherein the image processing device (120) is further configured to compute kinetics of mobile entities in the shot of the scene.

10. The system of claim 6, wherein the image processing device (120) is further configured to remove moving entities from the shot of the scene.
